Europäisches Patentamt

European Patent Office

Office européen des brevets

(11) Numéro de publication : **0 317 429 B2**

(12) **NOUVEAU FASCICULE DE BREVET EUROPEEN**

(45) Date de publication du nouveau fascicule du brevet : **15.11.95 Bulletin 95/46**

(51) Int. Cl.⁶ : **G01L 25/00**

(21) Numéro de dépôt : **88402876.2**

(22) Date de dépôt : **16.11.88**

(54) **Procédé pour étalonner des appareils de mesure de force ou de moment et appareils s'y rapportant.**

(30) Priorité : **20.11.87 FR 8716085**

(43) Date de publication de la demande :
**24.05.89 Bulletin 89/21**

(45) Mention de la délivrance du brevet :
**18.12.91 Bulletin 91/51**

(45) Mention de la décision concernant
l'opposition :
**15.11.95 Bulletin 95/46**

(84) Etats contractants désignés :
**AT BE CH DE ES FR GB IT LI NL SE**

(56) Documents cités :
**EP-A- 0 055 633**
**EP-A- 0 089 209**

(56) Documents cités :
**EP-A- 0 141 710**
**WO-A-84/02186**
**DE-B- 1 045 685**
**FR-A- 2 540 990**
**GB-A- 2 009 940**
**Handbuch des Wägens, Viewegverlag, 1985,
pp. 482-487**
**VDI-Berichte No. 212, 1974, pp. 21-26**

(73) Titulaire : **SEB S.A.**
**F-21260 Selongey (FR)**

(72) Inventeur : **Sarrazin, Michel**
**Massingy**
**F-74150 Rumilly (FR)**

(74) Mandataire : **Keib, Gérard et al**
**Cabinet Claude Rodhain SA**
**3, rue Moncey**
**F-75009 Paris (FR)**

EP 0 317 429 B2

## Description

La présente invention concerne un procédé permettant d'étalonner, par le calcul, des appareils de mesure de force ou de moment qui comportent un socle fixe, un plateau de charge sur lequel s'applique la force ou le moment à mesurer, et un organe de mesure encastré à une de ses extrémités dans le socle fixe et à l'autre extrémité dans le plateau de charge et instrumenté en capteur.

L'invention vise également les appareils ainsi étalonnés.

De tels appareils sont utilisés notamment pour le pesage (pèse-personnes, pèse-aliments, bascules) ou la mesure de couples.

Dans ces appareils, l'organe de mesure généralement constitué par un barreau comprenant des jauges de contrainte est soumis en pratique, non seulement à la charge - force ou moment - à mesurer, mais aussi à des moments parasites qui peuvent résulter soit d'imperfections de l'appareillage (par exemple liées au barreau, à l'encastrement de celui-ci, aux jauges et à la disposition de celles-ci sur le barreau), soit de l'imperfection du mode d'application de la charge à mesurer (par exemple une charge placée sur le plateau d'un appareil de pesage engendre, selon sa position sur le plateau, des moments parasites de torsion ou de flexion).

Dans ces appareils, les jauges portées par le barreau sont connectées électriquement en un pont de mesure qui délivre un signal qui est sensible à ces moments parasites. Ce signal comporte donc des composantes parasites qui faussent la mesure de la force ou du moment à mesurer.

Pour remédier à cet inconvénient, plusieurs solutions techniques sont déjà connues et appliquées.

Dans une première solution connue, on ajuste l'organe de mesure en enlevant de la matière à un endroit judicieusement choisi des jauges d'extensométrie, afin de modifier l'angle formé entre la direction électrique des jauges et l'axe longitudinal du corps de mesure c'est-à-dire du barreau.

Cette solution a l'inconvénient de pouvoir difficilement être mise en algorithme d'application automatique, exige une interprétation empirique des défauts, un personnel hautement qualifié et des moyens très onéreux.

Selon une autre méthode, on ajoute au pont de jauges destiné à mesurer la charge - force ou moment - à mesurer, des jauges additionnelles ou de réglage destinées à corriger l'effet des charges parasites.

Selon le brevet français n°2554229, on prévoit une disposition de jauges d'extensométrie sur le barreau d'un appareil de pesage, qui permet de lire d'une part un signal principalement proportionnel au poids appliqué sur le barreau, mais affecté des composantes parasites engendrées par les moments suivant l'axe du barreau et un axe perpendiculaire à celui-ci et d'autre part deux signaux principalement proportionnels à chacun de ces deux moments. Il est alors possible de réinjecter, sur le signal principalement proportionnel au poids, la part des signaux principalement proportionnels aux deux moments précités, nécessaire pour compenser et annuler les composantes parasites du signal principal.

Selon la demande de brevet européen EP-A-0141710, on connaît un appareil de pesage qui comprend un socle et un plateau sensiblement parallèle à ce socle et destiné à recevoir la charge à peser. Un barreau métallique disposé entre ce socle et ce plateau, ayant ses extrémités opposées fixées rigidement à ce socle et à ce plateau, porte des jauges de contrainte sensibles à la flexion, et des jauges de contrainte sensibles à la torsion. Le barreau comprend deux paires de jauges de contrainte sensibles à la flexion sensiblement alignées sur l'axe longitudinal du barreau sur une même face plane.

Les jauges de chaque paire sont connectées en opposition suivant un pont de Wheatstone et deux jauges sensibles à la torsion sont branchées en série et reliées respectivement aux bornes d'alimentation du pont de Wheatstone.

Cet appareil nécessite cependant la présence et le réglage d'une résistance ajustable branchée en parallèle entre les deux jauges sensibles à la torsion et l'une des bornes de mesure du signal du pont de Wheatstone, pour pouvoir régler et étalonner l'appareil.

Les solutions décrites ci-dessus sont inspirées de la même démarche qui consiste à modifier matériellement l'organe de mesure, à savoir le barreau avec ses jauges, pour le rendre sensible à la seule charge - force ou moment - à mesurer et insensible aux charges parasites. Elles présentent toutes, de ce fait, le même inconvénient, qui est d'exiger, après la fabrication des appareils, une prise en mains de chaque appareil pour une modification qui lui est spécifique (par exemple soudure de composants additionnels, coupure de pistes de certaines jauges, réglage de la résistance). Ces opérations sont longues et coûteuses.

Le but de la présente invention est d'éviter tous ces inconvénients par un procédé d'étalonnage qui ne requière plus d'intervention matérielle sur l'organe de mesure après fabrication de celui-ci et qui soit entièrement automatisable.

Suivant l'invention, le procédé pour étalonner un appareil de mesure de force ou de moment comprenant un organe de mesure comportant un barreau qui comporte un pont de jauges d'extensométrie délivrant un signal lequel est principalement sensible à la force ou au moment à mesurer, l'organe de mesure étant pourvu à sa fabrication de deux autres ponts de jauges d'extensométrie, est caractérisé en ce que ces deux autres ponts sont indépendants l'un de l'autre et par rapport au premier pont, et délivrent des signaux sensibles principalement à deux contraintes parasites autres que la force ou le moment à mesurer, le procédé consistant dans un premier temps à mesurer les signaux délivrés par les trois ponts de jauges en l'absence de toute charge appliquée sur l'organe de mesure, puis sous au moins trois positions de charges connues choisies parmi celles auxquelles chacun des ponts de jauges est le plus sensible, dans un second temps à calculer à partir des mesures de référence précitées les paramètres de sensibilité selon lesquels chacun des signaux délivrés par les ponts de mesure est fonction des charges appliquées, et dans un troisième temps à calculer à partir de ces paramètres de sensibilité la correction à apporter à la force ou au moment mesuré(e) par le premier pont de jauges.

L'expérience et le calcul montrent en effet que, lorsqu'un organe de mesure, un barreau par exemple, est équipé de plusieurs ponts de jauges conformément à l'invention, le signal délivré par chaque pont de jauges est une fonction linéaire des diverses charges appliquées, le paramètre de chaque terme de l'équation représentant la sensibilité de ce pont de jauge à telle force ou tel moment.

Sur l'appareil tel que fabriqué, un nombre adéquat de mesures de référence convenablement choisies permet, en résolvant un système d'équations linéaires, de calculer tous les paramètres de sensibilté.

Après quoi, et sans aucune intervention matérielle sur l'organe de mesure, il est ensuite possible, à chaque mesure nouvelle effectuée, de calculer la valeur vraie de la charge - force ou moment - à mesurer, en résolvant cette fois un système d'équations linéaires dont tous les paramètres (les sensibilités) sont maintenant connus ainsi que les premiers membres (les signaux), et dont la charge à mesurer est une des inconnues.

Ce procédé est entièrement automatisable. Les calculs à effectuer sont en effet suffisamment simples pour pouvoir être traités par un organe de calcul tel qu'un microprocesseur intégré à l'appareil, dans lequel il suffit d'inscrire en mémoire les paramètres résultant des mesures de référence.

Il permet des corrections suffisamment précises pour les mesures industrielles ou domestiques.

Par exemple, pour les appareils de mesure de force - généralement appareils de pesage (pèse-personnes, pèse-aliments, bascules) - munis d'un plateau de charge, le signal délivré par un pont de jauges fixé au barreau de mesure est une fonction linéaire de la force P à mesurer et de la position où est appliquée la force sur le plateau, définie par ses coordonnées X et Z. Ce signal S est de la forme :

$$S = aP + bPX + cPZ + d$$

Cela étant, en équipant le barreau de trois ponts de jauges d'extensométrie d'orientations adéquates, c'est-à-dire un premier pont de jauges d'extensométrie sensible principalement à la force P à mesurer, un second pont de jauges sensible principalement à la torsion résultant du moment transversal PZ engendré par l'écartement du point d'application de la force P par rapport à l'axe longitudinal du barreau, et un troisième pont de jauges sensible principalement à la flexion résultant du moment longitudinal PX engendré par la position du point d'application de la force P dans l'axe longitudinal du barreau par rapport à son point central, il suffit d'une mesure à vide (qui donne les trois paramètres $d_i$) et de trois mesures de référence en charge, pour connaître, en résolvant un système linéaire de neuf équations à neuf inconnues, tous les neuf paramètres (sensibilités) $a_i$, $b_i$ et $c_i$.

Par la suite, à chaque mesure d'une force, l'organe de calcul n'aura à résoudre qu'un système linéaire de trois équations à trois inconnues, pour calculer, en fonction des trois signaux mesurés, la vraie valeur de la force P.

Le procédé exposé ci-dessus sous sa forme la plus générale, peut être simplifié dans les cas pratiques en choisissant les mesures de référence les plus adéquates selon les caractéristiques des ponts de jauges, et en exprimant les équations de calcul sous des formes simplifiées acceptables selon le degré de précision désiré pour la mesure.

Bien entendu, on peut transposer ce qui précède du cas de la mesure d'une force au cas de la mesure d'un moment, avec l'effet de forces ou moments parasites.

L'invention vise également un appareil pour mesurer une force comprenant des moyens pour la mise en oeuvre du procédé d'étalonnage selon l'invention.

Suivant cet aspect de l'invention, cet appareil comprenant un socle fixe, un plateau destiné à recevoir la force P à mesurer et un barreau encastré à l'une de ses extrémités dans le socle fixe et à l'autre extrémité dans le plateau de charge, ce barreau comprenant un pont de jauges d'extensométrie sensible principalement à la force à mesurer, est caractérisé en ce qu'il comprend en outre un second pont de jauges sensible principalement à la torsion résultant du moment transversal PZ engendré par l'écartement du point d'application de la force P par rapport à l'axe longitudinal du barreau, et un troisième pont de jauges sensible principalement à la flexion résultant du moment longitudinal PX engendré par la position du point d'application de la force P dans l'axe longitudinal du barreau par rapport à son point central, en ce que l'appareil comprend en outre des moyens pour mesurer les trois signaux délivrés par les trois ponts de jauges en l'absence de toute force appliquée sur le plateau, et pour mesurer une force de référence connue appliquée successivement en trois points du plateau de positions connues, des moyens pour calculer, en résolvant le système de neuf équations linéaires ainsi obtenues par ces mesures de référence, les neuf paramètres de sensibilité selon lesquels chacun des trois signaux est fonction de la force P et des moments appliqués PX et PZ, et des moyens pour calculer à partir de ces paramètres de sensibilité la correction à apporter à la force P mesurée par le premier pont de jauges.

D'autres particularités et avantages de l'invention apparaîtront encore dans la description ci-après.

Aux dessins annexés, donnés à titre d'exemples non limitatifs :

- la figure 1 est une vue schématique en coupe longitudinale d'un appareil de pesage conforme à l'invention,
- la figure 2 est une vue en perspective de cet appareil,
- la figure 3 est une vue en plan de la disposition des trois ponts de jauges d'extensométrie sur la face supérieure du barreau de l'appareil,
- la figure 4 est le schéma de connexion électrique de ces jauges,
- la figure 5 est le schéma vu en plan des positions préférables de la charge de référence pour les trois mesures d'étalonnage sous charge,
- la figure 6 est une vue en plan de la disposition de trois demi-ponts de jauges d'extensométrie, selon une version simplifiée de l'invention,
- la figure 7 est le schéma de connexion électrique de ces jauges.

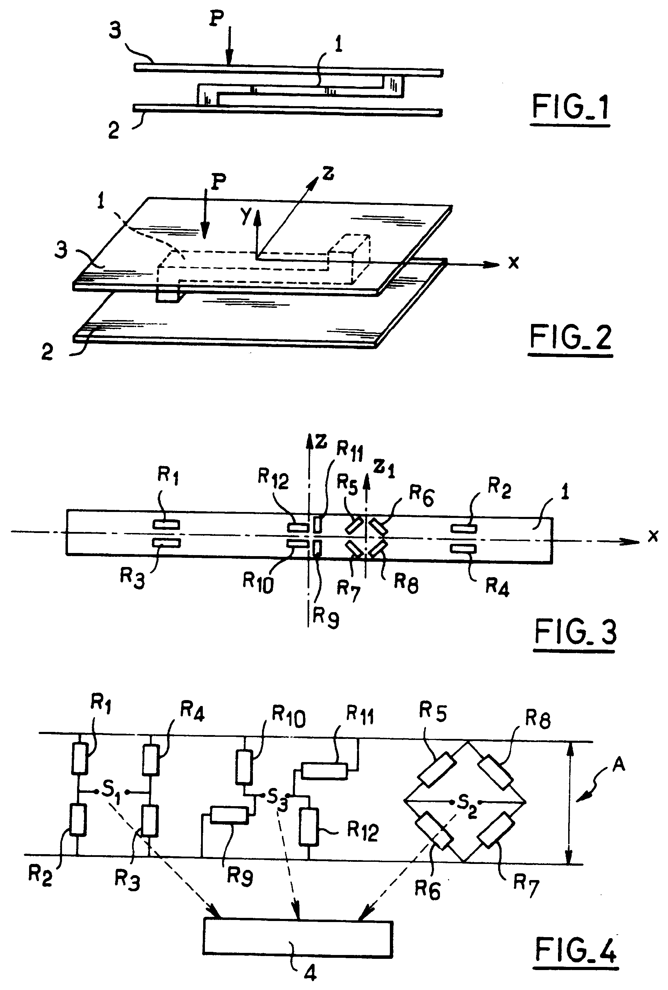

Un appareil de pesage, représenté schématiquement par les figures 1 et 2, comporte comme organe de mesure un barreau élastique 1, par exemple en acier, encastré à l'une de ses extrémités dans un socle fixe 2 et à l'autre extrémité dans le plateau de charge 3.

Le poids P à mesurer est posé sur le plateau 3 en un point repéré par ses coordonnées X, Z dans un système d'axes orthonormés XYZ, l'axe X étant confondu avec l'axe longitudinal du barreau 1.

Le barreau 1 est soumis à plusieurs contraintes combinées : la force verticale P et les moments PX (moment longitudinal de flexion) et PZ (moment transversal de torsion) qu'elle engendre.

La face supérieure du barreau 1 est équipée de trois ponts de jauges d'extensométrie disposés comme indiqué sur la figure 3 et connectés électriquement comme montré sur la figure 4.

Le barreau 1 comprend un premier pont de jauges $R_1$, $R_2$, $R_3$, $R_4$, comprenant deux paires $R_1$, $R_3$ ; $R_2$, $R_4$ disposées symétriquement par rapport à l'axe médian longitudinal X et par rapport à l'axe médian transversal Z du barreau 1.

Ces quatre jauges $R_1$, $R_2$, $R_3$, $R_4$ sont connectées à une alimentation électrique A et le pont de mesure formé par celles-ci délivre un signal électrique $S_1$, comme indiqué sur la figure 4.

Ce pont de jauges $R_1$, $R_2$, $R_3$, $R_4$ est principalement sensible au poids P à mesurer. Il est toutefois également sensible dans une moindre mesure aux moments parasites PX et PZ.

Le signal $S_1$ délivré par ce pont de jauges est de la forme :

$$S_1 = a_1P + b_1PX + C_1PZ + d_1$$

dans laquelle :

$d_1$ est le signal à vide (offset) résultant notamment de l'imperfection électrique du pont et du poids propre des organes de l'appareil ;

$a_1, b_1, c_1$ sont les paramètres de sensibilité du pont à chaque contrainte : $b_1$ et $c_1$ sont petits par rapport à $a_1$.

Le barreau 1 est équipé d'un deuxième pont de jauges $R_5$, $R_5$, $R_7$, $R_8$ disposées à 45° de l'axe X symétriquement par rapport à cet axe et par rapport à un axe $Z_1$ parallèle à l'axe Z.

Ce pont de jauges $R_5$, $R_6$, $R_7$, $R_5$ est principalement sensible au moment transversal de torsion PZ.

Ces jauges sont le plus près possible l'une de l'autre pour que le pont soit peu sensible au déplacement du poids P selon l'axe X. Ces jauges sont connectées à l'alimentation A et le pont formé par ces jauges délivre un signal $S_2$ de la forme :

$$S_2 = a_2P + b_2PX + c_2PZ + d_2$$

$d_2$ étant la valeur du signal à vide et $a_2$, $b_2$, $c_2$ les paramètres de sensibilité du pont à chaque contrainte.

Le barreau 1 est équipé d'un troisième pont de jauges $R_9$, $R_{10}$, $R_{11}$, $R_{12}$ disposées par paires de part et d'autre de l'axe X et de l'axe Z. La direction électrique des jauges $R_{10}$ et $R_{12}$ est parallèle à l'axe X, tandis que celle des jauges $R_{11}$ et $R_9$ est perpendiculaire à l'axe X c'est-à-dire parallèle à l'axe Z. Ce troisième pont de jauges est principalement sensible au moment longitudinal de flexion PX.

Les trois ponts de jauges précités sont indépendants les uns des autres, c'est-à-dire qu'il n'existe aucune connexion électrique entre eux.

Pour rendre ce pont sensible à PX, on opère par somme de moments fléchissants (et non plus par différence, comme pour le premier point). Les jauges $R_{10}$, $R_{12}$ subissent l'effet du moment fléchissant et les jauges $R_9$ et $R_{11}$ subissent l'effet de Poisson.

Ce troisième pont délivre un signal $S_3$ de la forme :
$$S_3 = a_3P + b_3PX + c_3PZ + d_3$$
$d_3$ étant le signal à vide, et $a_3$, $b_3$ et $c_3$ les paramètres de sensibilité du pont à chaque contrainte.

Pour étalonner l'appareil de mesure que l'on vient de décrire, on procède aux quatre mesures d'étalonnage suivantes : on effectue d'abord une mesure des trois signaux $S_1$, $S_2$, $S_3$ à vide, c'est-à-dire sans aucun poids sur le plateau 3. Cette mesure donne les valeurs $d_1$, $d_2$ et $d_3$ ; puis on effectue trois mesures avec un poids de référence $P_r$ connu, qu'on pose sur le plateau 3 successivement en trois positions connues : A, B, C définies par les coordonnees $X_A$, $Z_A$ ; $X_B$, $Z_B$ ; et $X_C$, $Z_B$ telles que :
$$A(X_A, Z_A), B(X_B, Z_B), C(X_C, Z_C)$$
On mesure ainsi les neuf signaux ci-après :
$$S_{1A} = a_1P + b_1 PX_A + c_1 PZ_A + d_1$$
$$S_{2A} = a_2P + b_2 PX_A + c_2 PZ_A + d_2$$
$$S_{3A} = a_3P + b_3 PX_A + c_3 PZ_A + d_3$$
$$S_{1B} = a_1P + b_1 PX_B + c_1 PZ_B + d_1$$
$$S_{2B} = a_2P + b_2 PX_B + c_2 PZ_B + d_2$$
$$S_{3B} = a_3P + b_3 PX_B + c_3 PZ_B + d_3$$
$$S_{1C} = a_1P + b_1 PX_C + c_1 PZ_c + d_1$$
$$S_{2C} = a_2P + b_2 PX_C + c_2 PZ_c + d_2$$
$$S_{3C} = a_3P + b_3 PX_C + C_3 PZ_c + d_3$$

La résolution de ce système linéaire de neuf équations à neuf inconnues permet de calculer les neuf paramètres (sensibilités) $a_i$, $b_i$, $c_i$. On les inscrit dans la mémoire de l'organe de calcul 4 tel qu'un microprocesseur intégré à l'appareil de mesure (voir figure 4).

Par la suite, pour mesurer un poids P inconnu, posé en un point X, Z inconnu (ou pas connu avec précision) du plateau 3, l'appareil mesure les trois signaux $S_1$, $S_2$, $S_3$. On a alors le système de trois équations suivant :
$$a_1P + b_1PX + c_1PZ + d_1 = S_1$$
$$a_2P + b_2PX + c_2PZ + d_2 = S_2$$
$$a_3P + b_3PX + c_3PZ + d_3 = S_3$$
La méthode des déterminants ci-après :

$$
\begin{vmatrix} a_1 & b_1 & c_1 \\ a_2 & b_2 & c_2 \\ a_3 & b_3 & c_3 \end{vmatrix}
\times
\begin{vmatrix} P \\ PX \\ PZ \end{vmatrix}
=
\begin{vmatrix} S_1 & - & d_1 \\ S_2 & - & d_2 \\ S_3 & - & d_3 \end{vmatrix}
=
\begin{vmatrix} S'_1 \\ S'_2 \\ S'_3 \end{vmatrix}
$$

permet de calculer P, PX et PZ.

Ce calcul peut être effectué à l'aide du microprocesseur 4 intégré dans l'appareil. Ce procédé permet de calculer non seulement la valeur exacte du poids P appliqué sur le plateau 3, mais aussi sa position réelle sur ce plateau.

Ce qui précède a exposé le procédé sous sa forme la plus générale.

En pratique, on simplifie l'application du procédé, en choisissant d'abord des mesures de référence qui simplifient les équations et les calculs.

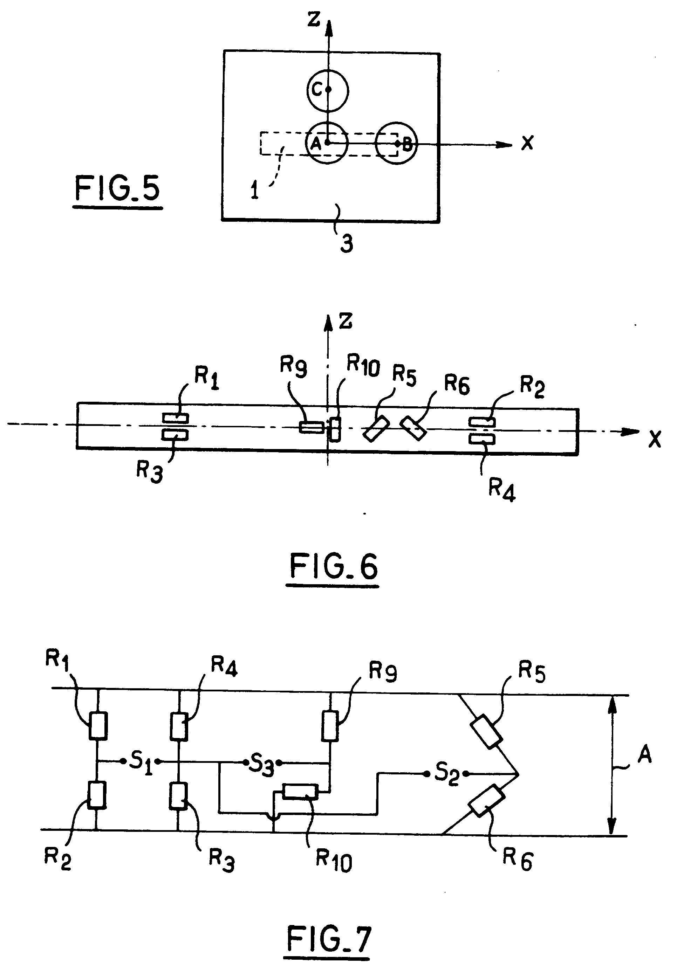

Ainsi, afin d'éviter d'avoir à résoudre un système de 9 équations pour calculer les 9 paramètres $a_1$, $b_1$, $c_1$, on choisira par exemple les positions des 3 mesures de référence en charge telles que représentées sur la figure 5, à savoir :

Position A : X = Z = 0 : on mesure les 3 signaux $S_{iA}$, qui donnent les valeurs $a_i$ =

Position B : $X \neq 0$ Z = 0 : on mesure les 3 signaux

$S_{iB}$, qui donnent alors les valeurs

$$b_i = \frac{S_{iB} - d_i - a_iPr}{XPr}$$

Position C : X = 0 $Z \neq 0$ : on mesure les 3 signaux $S_{iC}$, qui donnent alors les valeurs

$$c_i = \frac{S_{iC} - d_i - a_iPr}{ZPr}$$

Pour augmenter la precision, on peut aussi dédoubler chacune des deux dernières mesures en :

$$B : X \neq 0 \ Z = 0 \text{ et } B' : - \ X \neq 0 \ Z = 0 \text{ d'où } b_i = \frac{S_{iB} - S_{iB}'}{2XPr}$$

$$C : X = 0 \; Z \neq 0 \text{ et } C' : X = 0 \; -Z \neq 0 \text{ d'où } c_i = \frac{S_{iC} - S_{iC}}{2ZPr}$$

ce qui élimine du calcul des $a_i$, $b_i$, $c_i$ les erreurs sur les $d_i$. Ces positions de Pr pour les mesures d'étalonnage ont été choisies de façon à annuler successivement les PrX et PrZ.

Il n'y a plus de système d'équations à résoudre, et l'étalonnage ne requiert plus que des calculs très simples donnant les $a_i$, $b_i$, $c_i$.

Pour mesurer ensuite un poids P inconnu, on peut aussi simplifier les calculs en admettant que le terme en PX du signal $S_2$ (principalement sensible au moment transversal de torsion PZ) est négligeable, et que le terme en PZ du signal $S_2$ (principalement sensible au moment longitudinal PX) est négligeable. Le système des 3 équations à 3 inconnues (P, X, Z) à résoudre devient alors :

$$S_1 = a_1 P + b_1 PX + c_1 PZ + d_1$$
$$S_2 = a_2 P \qquad + c_2 PZ + d_2$$
$$S_3 = a_3 P + b_3 PX \qquad + d_3$$

Enfin, au lieu de résoudre ce système de trois équations à trois inconnues par la méthode rigoureuse des déterminants, on peut aussi procéder par approximations, par exemple comme suit :

- une première valeur approchée du P inconnu est estimée à

$$Pe = \frac{S_1 - d_1}{a_1}$$

- on estime ensuite les valeurs approchés de X et Z par

$$Xe = \frac{S_3 - a_3 Pe - d_3}{b_3 Pe}$$

et

$$Ze = \frac{S_2 - a_2 Pe - d_2}{C_2 Pe}$$

- on recalcule alors une valeur plus exacte de P

$$P = \frac{S_1 - b_1 PeXe - c_1 PeZe - d_1}{a_1}$$

L'expérience a montré que, même avec cette méthode de calcul par approximation très simplifiée, les corrections sont suffisamment précises pour des balances de 750 points définis selon les normes françaises de la classe IV.

L'avantage est que les calculs sont réalisables par des microprocesseurs de faible capacité.

La description ci-dessus montre par conséquent que l'étalonnage de l'appareil de mesure conforme à l'invention n'exige plus d'intervention ultérieure sur les jauges appliquées sur le barreau 1 consistant à modifier celles-ci.

Le barreau 1 est équipé une fois pour toute de jauges qui permettent d'étalonner l'appareil au moyen de mesures de signaux initiaux et de calculs qui peuvent être effectués automatiquement au moyen d'un microprocesseur.

Bien entendu, la disposition des trois ponts de jauges représentée par les figures 3 et 4 n'est donnée qu'à titre d'exemple. La disposition représentée a l'avantage que toutes les jauges sont situées sur la même face du barreau 1, et peuvent être positionnées en fabrication sur un même support diélectrique, facile à appliquer en une seule opération dans la direction longitudinale du barreau 1.

Les figures 6 et 7 montrent une autre possibilité de réalisation plus économique au moyen de demi-ponts au lieu des ponts complets.

Dans cette réalisation simplifiée, les jauges $R_1$, $R_2$, $R_3$, $R_4$ du premier pont sensible pricipalement au poids P et délivrant le signal $S_1$ ont la même disposition que sur la figure 3.

Le second pont sensible à la position en Z et délivrant le signal $S_2$ ne comprend que deux jauges $R_5$, $R_5$ disposées à 45° de l'axe X et décalées de l'axe Z.

Le troisième pont sensible à la position en X et délivrant le signal $S_3$ ne comprend que deux jauges $R_9$, $R_{10}$, disposées de part et d'autre de l'axe Z, l'une $R_9$ ayant sa direction électrique parallèle à l'axe X et l'autre $R_{10}$ ayant cette direction perpendiculaire à cet axe X.

La figure 6 montre comment ces trois ponts de jauges sont connectés électriquement à l'alimentation A.

Bien entendu, également, la forme du barreau représentée sur les figures 1 et 2 n'est qu'un exemple. Le procédé peut aussi s'appliquer à des organes de mesure de toute autre forme, puisqu'il repose sur la résolution numérique de systèmes d'équations dont les paramètres (sensibilités) n'ont pas à être connus par des expressions explicites en fonctions des caractéristiques géométriques et mécaniques de l'organe de mesure, mais seront calculés en fonction des signaux délivrés aux mesures d'étalonnage.

Enfin, toute la description qui précède a traité de l'exemple de la mesure d'une force (précisément d'un poids). Le procédé peut également être appliqué à la mesure d'un moment.

Par ailleurs, le premier pont de jauges peut être limité à deux jauges et les second et troisième ponts à une seule jauge associée à des résistances fixes insensibles aux déformations du barreau.

## Revendications

1.  Procédé pour étalonner un appareil de mesure de force ou de moment qui comprend un organe de mesure (1) comportant un barreau qui comporte un pont de jauges d'extensométrie ($R_1$, $R_2$, $R_3$, $R_4$) délivrant un signal qui est principalement sensible à la force ou au moment à mesurer, l'organe de mesure (1) étant pourvu à sa fabrication de deux autres ponts de jauges d'extensométrie ($R_5$, $R_6$, $R_7$, $R_5$) ; ($R_9$, $R_{10}$, $R_{11}$, $R_{12}$),
    caractérisé en ce que ces deux autres ponts sont indépendants l'un de l'autre et par rapport au premier pont et délivrent des signaux sensibles principalement à deux contraintes parasites autres que la force ou le moment à mesurer, le procédé consistant dans un premier temps à mesurer les signaux délivrés par les trois ponts de jauges en l'absence de toute charge appliquée sur l'organe de mesure, puis sous au moins trois positions de charges de référence connues choisies parmi celles auxquelles chacun des ponts de jauges est le plus sensible, dans un second temps à calculer à partir des mesures de référence précitées les paramètres de sensibilité selon lesquels chacun des signaux délivrés par les ponts de mesure est fonction des charges appliquées, et dans un troisième temps à calculer à partir de ces paramètres de sensibilité la correction à apporter à la force ou au moment mesuré(e) par le premier pont de jauges ($R_1$, $R_2$, $R_3$, $R_4$).

2.  Procédé pour étalonner un appareil de mesure de force conforme à la revendication 1, caractérisé en ce que qu'il comporte un socle fixe (2), un plateau de charge (3) sur lequel s'applique la force (P) à mesurer, et un organe de mesure (1) encastré à l'une de ses extrémités dans le socle fixe et à l'autre extrémité dans le plateau de charge, cet organe de mesure (1) comprenant un premier pont de jauges d'extensométrie ($R_1$, $R_2$, $R_3$, $R_4$) sensible principalement à la force (P) à mesurer, un second pont de jauges ($R_5$, $R_6$, $R_7$, $R_5$) sensible principalement à la torsion résultant du moment transversal (PZ) engendré par l'écartement du point d'application de la force (P) par rapport à l'axe longitudinal de l'organe de mesure (1), et un troisième pont de jauges ($R_9$, $R_{10}$, $R_{11}$, $R_{12}$) sensible principalement à la flexion résultant du moment longitudinal (PX) engendré par la position du point d'application de la force (P) dans l'axe longitudinal de l'organe de mesure (1) par rapport à un point de référence, ce procédé consistant dans un premier temps, à mesurer les trois signaux ($S_1$, $S_2$, $S_3$) délivrés par les trois ponts d'abord en l'absence de toute force appliquée sur le plateau de charge (3) puis sous une force de référence (Pr) connue appliquée successivement en trois points du plateau (3) de positions connues et dans un second temps, à calculer, en résolvant le système de neuf équations linéaires ainsi obtenues par ces mesures de référence, les neuf paramètres de sensibilité selon lesquels chacun des trois signaux est fonction de la force (P) et des moments (PX) et (PZ) appliqués.

3.  Procédé conforme à la revendication 2, caractérisé en ce que, dans le troisième temps, on inscrit les paramètres de sensibilité calculés dans la mémoire d'un organe de calcul intégré à l'appareil et programmé de telle sorte que, à chaque mesure d'une force inconnue (P) qui sera effectuée par la suite, il calcule automatiquement en temps réel, en fonction des trois signaux ($S_1$, $S_2$, $S_3$) délivrés par les trois ponts de jauges, et compte tenu des effets engendrés par les moments parasites (PX) et (PZ), la vraie valeur de la force (P) à mesurer.

4.  Procédé conforme à l'une des revendications 2 ou 3, caractérisé en ce que, pour les mesures de référence, les trois positions successives d'application de la force de référence (Pr) sont choisies de façon à annuler certains termes des équations et ainsi à simplifier le calcul des neuf paramètres de sensibilité.

5.  Procédé conforme à l'une des revendications 2 à 4, caractérisé en ce que, pour calculer la vraie valeur de la force inconnue (P) à mesurer, compte tenu de la précision désirée, on simplifie le système d'équations en négligeant certains termes petits relativement aux autres, et on effectue des calculs par approximations.

6.  Appareil pour mesurer une force (P) comprenant un socle fixe (2), un plateau (3) destiné à recevoir la force (P) à mesurer et un organe de mesure (1) encastré à l'une de ses extrémités dans le socle fixe et à l'autre extrémité dans le plateau de charge, cet organe de mesure (1) comprenant un (lire : "premier") pont de jauges d'extensométrie ($R_1$, $R_2$, $R_3$, $R_4$) sensible principalement à la force (P) à mesurer, un second pont de jauges ($R_5$, $R_6$, $R_7$, $R_8$) sensible principalement à la torsion résultant du moment transversal (PZ) engendré par l'écartement du point d'application de la force (P) par rapport à l'axe longitudinal de l'organe de mesure (1), et un troisième pont de jauges ($R_9$, $R_{10}$, $R_{11}$, $R_{12}$) sensible principalement à la flexion résultant du moment longitudinal (PX) engendré par la position du point d'application de la force (P) dans l'axe longitudinal de l'organe de mesure (1) par rapport à un point de référence, caractérisé en ce que ces trois ponts de jauges sont indépendants les uns des autres, en ce que l'appareil comprend, en outre, des moyens pour mesurer les trois signaux ($S_1$, $S_2$, $S_3$) délivrés par les trois ponts de jauges en l'absence de toute force appliquée sur le plateau (3), et pour mesurer une force de référence (Pr) connue appliquée successivement en trois points du plateau (3) de positions connues, des moyens pour calculer, en résolvant le système de neuf équations linéaires ainsi obtenues par ces mesures de référence, les neuf paramètres de sensibilité selon lesquels chacun des trois signaux est fonction de la force (P) et des moments (PX) et (PZ) appliqués, et des moyens pour à calculer à partir de ces paramètres de sensibilité la correction à apporter à la force (P) mesurée par le premier pont de jauges ($R_1$, $R_2$, $R_3$, $R_4$).

7. Appareil conforme à la revendication 6, caractérisé en ce que les moyens de calcul comprennent un microprocesseur comportant une mémoire susceptible de stocker les paramètres de sensibilité calculés, ce microprocesseur étant programmé de telle sorte que, à chaque mesure d'une force inconnue (P), il calcule automatiquement, en fonction des trois signaux ($S_1$, $S_2$, $S_3$) délivrés par les trois ponts de jauges et compte tenu des effets engendrés par les moments parasites (PX) et (PZ), la vraie valeur de la force (P) à mesurer.

8. Appareil conforme à la revendication 7, caractérisé en ce que le microprocesseur fait partie de l'appareil.

9. Appareil conforme à l'une quelconque des revendications 6 à 8, caractérisé en ce que le premier pont de jauges comprend deux paires de jauges ($R_1$, $R_3$) ; ($R_2$, $R_4$) disposées symétriquement par rapport à l'axe médian longitudinal (X) et par rapport à l'axe médian transversal (Z) de l'organe de mesure (1).

10. Appareil conforme à la revendication 9, caractérisé en ce que le second pont de jauges comprend quatre jauges ($R_5$, $R_6$, $R_7$, $R_8$) disposées à 45° de l'axe (X) symétriquement par rapport à cet axe et par rapport à un axe ($Z_1$) parallèle à l'axe (Z).

11. Appareil conforme à la revendication 9, caractérisé en ce que le troisième pont de jauges comprend deux paires de jauges ($R_9$, $R_{10}$) ; ($R_{11}$, $R_{12}$) dont l'une est parallèle à l'axe (X), tandis que l'autre est parallèle à l'axe (Z).

12. Appareil conforme à la revendication 9, caractérisé en ce que le second pont de jauges comprend deux jauges ($R_5$, $R_5$) disposées à 45° de l'axe (X) et décalées par rapport à l'axe (Z).

13. Appareil conforme à la revendication 9, caractérisé en ce que le troisième pont de jauges comprend deux jauges ($R_9$, $R_{10}$) disposées de part et d'autre de l'axe (Z) et respectivement parallèles et perpendiculaires à l'axe (X).

## Claims

1. A method of calibrating an apparatus for measuring force or torque which comprises a measuring element (1) comprising a bar having a bridge of strain gauges ($R_1$, $R_2$, $R_3$, $R_4$) delivering a signal mainly sensitive to the force or torque to be measured, the measuring element (11) being provided during manufacture with two other strain gauge bridges ($R_5$, $R_5$, $R_7$, $R_8$); ($R_9$, $R_{10}$, $R_{11}$, $R_{12}$), characterised in that these two further bridges are independent of one another and relatively to the first bridge and deliver signals sensitive mainly to two interfering stresses other than the force or torque to be measured, the method consisting, in a first phase, of measuring the signals delivered by the three gauge bridges in the absence of any load applied to the measuring element, then at at least three known reference load positions selected amongst those to which each of the gauge bridges is the most sensitive; in a second phase, of calculating from the said reference measurements the sensitivity parameters according to which each of the signals delivered by the measuring bridges is a function of the applied loads; and, in a third phase, of calculating from the sensitivity parameters the correction to be made to the force or torque measured by the first

gauge bridge ($R_1$, $R_2$, $R_3$, $R_4$).

2. A method of calibrating a force-measuring apparatus according to Claim 1, characterised in that it comprises a fixed baseplate (2), a load plate (3) to which the force (P) to be measured is applied and a measuring element (1) embedded at one of its ends in the three gauge bridges and in the light of the effects produced by the interfering torques (PX) and (PZ), the true value of the force (P) to be measured.

3. A method according to Claim 2, characterised in that, in the third phase, the calculated sensitivity parameters are written into the memory of a calculating element incorporated in the apparatus and so programmed that on each subsequent measurement of an unknown force (P) it automatically calculates in real time, as a function of the three signals ($S_1$, $S_2$, $S_3$) delivered by longitudinal torque (PX) produced by the position of the point of application of the force (P) on the longitudinal axis of the measuring element (1) relatively to a reference point, characterised in that the three gauge bridge are independent of one another, in that the apparatus further comprises means for measuring the three signals ($S_1$, $S_2$, $S_3$) delivered by the three gauge bridges in the absence of any force applied to the plate (3) and, for measuring a known reference force (Pr) applied consecutively at three points of the plate (3) whose positions are known, means for calculating, by solving the system of nine linear equations thus obtained by these reference measurements, the nine sensitivity parameters according to which each of the three signals is a function of the applied force (P) and torques (PX) and (PZ), and means for calculating from these sensitivity parameters the correction to be made to the force (P) measured by the first gauge bridge ($R_1$, $R_2$, $R_3$, $R_4$).

4. A method according to Claim 2 or 3, characterised in that the three consecutive positions of application of the reference force (Pr) for the reference measurements are so chosen as to cancel out some terms of the equations and thus to simplify the calculation of the nine sensitivity parameters.

5. A method according to any one of Claims 2 to 4, characterised in that to calculate the true value of the unknown force (P) to be measured and in the light of the required accuracy the system of equations is simplified by neglecting some terms which are minor relatively to the other terms and calculations are made by approximations.

6. An apparatus for measuring a force (P) comprising a fixed baseplate (2), a plate (3) for the application of the force (P) to be measured and a measuring element (1) embedded at one of its ends in the fixed baseplate and at its other end in the load plate, the measuring element (1) comprising a first strain gauge bridge ($R_1$, $R_2$, $R_3$, $R_4$) sensitive mainly to the force (P) to be measured, a second gauge bridge ($R_5$, $R_6$, $R_7$, $R_8$) sensitive mainly to the torsion resulting from the transverse torque (PZ) produced by the deviation of the point of application of the force (P) from the longitudinal axis of the measuring element (1), and a third gauge bridge ($R_9$, $R_{10}$, $R_{11}$, $R_{12}$) sensitive mainly to the bending resulting from the the fixed baseplate and at the other end in the load plate, the measuring element (1) comprising a first strain gauge bridge ($R_1$, $R_2$, $R_3$, $R_4$) sensitive mainly to the force (P) to be measured, a second gauge bridge ($R_5$, $R_6$, $R_7$, $R_8$) sensitive mainly to the torsion resulting from a transverse torque (PZ) produced by the deviation of the point of application of the force (P) from the longitudinal axis of the measuring element (1), and a third gauge bridge ($R_9$, $R_{10}$, $R_{11}$, $R_{12}$) sensitive mainly to the bending resulting from the longitudinal torque (PX) produced by the position of the point of application of the force (P) on the longitudinal axis of the measuring element (1) relatively to a reference point, the method consisting, in a first phase, of measuring the three signals ($S_1$, $S_2$, $S_3$) delivered by the three bridges first in the absence of any force applied to the load plate (3) then in response to a known reference force (Pr) applied consecutively to three points of the plate (3) whose positions are known and, in a second phase, of calculating, by solving the system of nine linear equations thus obtained by these reference measurements, the nine sensitivity parameters according to which each of the three signals is a function of the applied force (P) and torques (PX) and (PZ).

7. Apparatus according to Claim 6, characterised in that the calculation means comprise a microprocessor comprising a memory capable of storing the calculated sensitivity parameters, said microprocessor being so programmed that on each measurement of an unknown force (P) it automatically calculates, as a function of the three signals ($S_1$, $S_2$, $S_3$) delivered by the three gauge bridges and in the light of the effects produced by the interfering torques (PX) and (PZ), the true value of the force (P) to be measured.

8. Apparatus according to Claim 7, characterised in that the microprocessor forms part of the apparatus.

9. Apparatus according to any one of Claims 6 to 8, characterised in that the first gauge bridge comprises two pairs of gauges $(R_1, R_3)$; $(R_2, R_4)$ disposed symmetrically relatively to the central longitudinal axis (X) and relatively to the central transverse axis (Z) of the measuring element (1).

10. Apparatus according to Claim 9, characterised in that the second gauge bridge comprises four gauges $(R_5, R_6, R_7, R_5)$ disposed at 45° from the axis (X) symmetrically relatively to said axis and relatively to an axis $(Z_1)$ parallel to the axis (Z).

11. Apparatus according to Claim 9, characterised in that the third gauge bridge comprises two pairs of gauges $(R_9, R_{10})$; $(R_{11}, R_{12})$ one of which is parallel to the axis (X) while the other is parallel to the axis (Z).

12. Apparatus according to Claim 9, characterised in that the second gauge bridge comprises two gauges $(R_5, R_6)$ disposed at 45° from the axis (X) and offset relatively to the axis (Z).

13. Apparatus according to Claim 9, characterised in that the third gauge bridge comprises two gauges $(R_9, R_{10})$ disposed on either side of the axis (Z) and respectively parallel and perpendicular to the axis (X).


**Patentansprüche**

1. Verfahren zur Eichung eines Kraft- oder Momentenmeßgeräts, das ein Meßglied (1) mit einem Stab enthält, der eine Brücke aus Dehnungsmeßstreifen $(R_1, R_2, R_3, R_4)$ umfaßt, die ein hauptsächlich für die zu messende Kraft oder das zu messende Moment empfindliches Signal abgibt, wobei das Meßglied (1) bei seiner Herstellung mit zwei weiteren Brücken aus Dehnungsmeßstreifen $(R_5, R_6, R_7, R_8)$; $(R_9, R_{10}, R_{11}, R_{12})$ versehen wird, dadurch gekennzeichnet, daß die beiden weiteren Brücken voneinander und der ersten Brücke gegenüber unabhängig sind und Signale abgeben, die hauptsächlich auf zwei Störbeanspruchungen ansprechen, die von der zu messenden Kraft oder dem zu messenden Moment verschieden sind, wobei das Verfahren in einer ersten Stufe darin besteht, die von den drei Meßwertgeberbrücken abgegebenen Signale bei Fehlen jeglicher auf das Meßglied aufgebrachter Last zu messen, danach unter mindestens drei bekannten Bezugslast-Stellungen, die unter denen ausgewählt werden, für die jede der Meßwertgeberbrücken am empfindlichsten ist, in einer zweiten Stufe von den vorgenannten Bezugsmessungen aus die Empfindlichkeitsparameter zu berechnen, nach denen jedes der von den Meßwertgeberbrücken abgegebenen Signale von den aufgebrachten Lasten abhängig ist, und in einer dritten Stufe von diesen Empfindlichkeitsparametern aus die Korrektur auszurechnen, die an der/dem von der ersten Meßwertgeberbrücke $(R_1, R_2, R_3, R_4)$ gemessenen Kraft oder Moment vorzunehmen ist.

2. Verfahren zur Eichung eines Kraftmeßgeräts nach Anspruch 1, dadurch gekennzeichnet, daß es einen festen Sockel (2), eine Belastungsplatte (3), auf welche die zu messende Kraft (P) aufgebracht wird, und einen Stab (1) umfaßt, der an einem seiner äußersten Enden in den festen Sockel und am anderen äußersten Ende in die Belastungsplatte eingelassen ist, wobei dieser Stab (1) eine erste Brücke von Dehnungsmeßstreifen $(R_1, R_2, R_3, R_4)$ enthält, die hauptsächlich für die zu messende Kraft (P) empfindlich ist, eine zweite Meßwertgeberbrücke $(R_5, R_6, R_7, R_8)$, die hauptsächlich für die Torsion empfindlich ist, die sich aus dem Quermoment (PZ) ergibt, das vom Abstand des Angriffspunkts der Kraft (P) in bezug auf die Längsachse des Stabs (1) erzeugt wird, und eine dritte Meßwertgeberbrücke $(R_9, R_{10}, R_{11}, R_{12})$, die hauptsächlich für die Durchbiegung empfindlich ist, die sich aus dem Längsmoment (PX) ergibt, das von der Stellung des Angriffspunkts der Kraft (P) in der Längsachse des Stabs (1) im Verhältnis zu einem Bezugspunkt erzeugt wird, wobei dieses Verfahren in einer ersten Stufe darin besteht, die drei durch die drei Brücken abgegebenen Signale $(S_1, S_2, S_3)$ zunächst bei Fehlen jeglicher auf die Belastungsplatte (3) aufgebrachten Last zu messen, danach unter einer bekannten Bezugskraft (Pr), die nacheinander an drei Punkten der Platte (3) bekannter Stellungen aufgebracht wird, und in einer zweiten Stufe darin, unter Lösung des Systems von neun solcherart durch diese Bezugsmessungen erlangten Lineargleichungen die neun Empfindlichkeitsparameter auszurechnen, nach denen jedes der drei Signale abhängig von der aufgebrachten Kraft (P) und den aufgebrachten Momenten (PX) und (PZ) ist.

3. Verfahren nach Anspruch 2, dadurch gekennzeichnet, daß in der dritten Stufe die ausgerechneten Sensibilitätsparameter in den Speicher eines im Gerät integrierten Rechenelements eingeschrieben werden, das so programmiert ist, daß es bei jeder in der Folge durchgeführten Messung einer unbekannten Kraft (P) automatisch in Echtzeit abhängig von den drei durch die drei Meßwertgeberbrücken abgegebenen Signalen ($S_1$, $S_2$, $S_3$) und unter Berücksichtigung der von den Störmomenten (PX) und (PZ) erzeugten Auswirkungen, den wahren Wert der zu messenden Kraft (P) ausrechnet.

4. Verfahren nach einem der Ansprüche 2 oder 3, dadurch gekennzeichnet, daß für die Bezugsmessungen die drei aufeinanderfolgenden Stellungen des Angriffs der Bezugskraft (Pr) so ausgewählt werden, daß bestimmte Glieder der Gleichungen annulliert werden und somit die Berechnung der neun Empfindlichkeitsparameter vereinfacht wird.

5. Verfahren nach einem der Ansprüche 2 bis 4, dadurch gekennzeichnet, daß zur Ausrechnung des wahren Werts der unbekannten zu messenden Kraft (P), unter Berücksichtigung der erwünschten Genauigkeit, das Gleichungssystem vereinfacht wird, indem bestimmte kleine Glieder den anderen gegenüber ignoriert und Berechnungen durch Approximationen durchgeführt werden.

6. Gerät zum Messen einer Kraft (P), enthaltend einen festen Sockel (2), eine zur Aufnahme der zu messenden Kraft (P) bestimmte Platte (3) und ein Meßglied (1), das an einem seiner äußersten Enden im festen Sockel und am anderen äußersten Ende in der Belastungsplatte eingelassen ist, wobei dieses Meßglied (1) eine Brücke von Dehnungsmeßstreifen ($R_1$, $R_2$, $R_3$, $R_4$) umfaßt, die hauptsächlich für die zu messende Kraft (P) empfindlich ist, sowie eine zweite Meßwertgeberbrücke ($R_5$, $R_6$, $R_7$, $R_8$), die hauptsächlich für die Torsion empfindlich ist, die sich aus dem Quermoment (PZ) ergibt, das vom Abstand des Angriffspunkts der Kraft (P) in bezug auf die Längsachse des Stabs (1) erzeugt wird, und eine dritte Meßwertgeberbrücke ($R_9$, $R_{10}$, $R_{11}$, $R_{12}$), die hauptsächlich für die Durchbiegung empfindlich ist, die sich aus dem Längsmoment (PX) ergibt, das von der Lage des Angriffspunkts der Kraft (P) in der Längsachse des Stabs (1) im Verhältnis zu einem Bezugspunkt erzeugt wird, dadurch gekennzeichnet, daß diese drei Meßwertgeberbrücken voneinander unabhängig sind, daß das Gerät außerdem Mittel zur Messung der drei Signale ($S_1$, $S_2$, $S_3$) umfaßt, die von den drei Meßwertgeberbrücken bei Fehlen jeglicher auf die Platte (3) aufgebrachten Kraft abgegeben werden, und zur Messung einer bekannten Bezugskraft (Pr), die nacheinander an drei Punkten der Platte (3) bekannter Stellungen aufgebracht wird, Mittel zur Ausrechnung - unter Auflösung des Systems von solcherart durch diese Bezugsmessungen erlangten neun linearen Gleichungen - der neun Empfindlichkeitsparameter, nach denen jedes der drei Signale abhängig von der aufgebrachten Kraft (P) und den aufgebrachten Momenten (PX) und (PZ) ist, und Mittel zur von diesen Empfindlichkeitsparametern ausgehende Berechnung der Korrektur, die an der von der ersten Meßwertgeberbrücke ($R_1$, $R_2$, $R_3$, $R_4$) gemessenen Kraft (P) vorzunehmen ist.

7. Gerät nach Anspruch 6, dadurch gekennzeichnet, daß die Rechenmittel einen Mikroprozessor enthalten, der einen Speicher umfaßt, der die berechneten Empfindlichkeitsparameter speichern kann, wobei dieser Mikroprozessor so programmiert ist, daß er bei jeder Messung einer unbekannten Kraft (P) in Abhängigkeit von den drei durch die drei Meßwertgeberbrücken abgegebenen Signalen ($S_1$, $S_2$, $S_3$) und unter Berücksichtigung der von den Störmomenten (PX) und (PZ) erzeugten Auswirkungen, den wahren Wert der zu messenden Kraft (P) automatisch ausrechnet.

8. Gerät nach Anspruch 7, dadurch gekennzeichnet, daß der Mikroprozessor Teil des Geräts ist.

9. Gerät nach einem der Ansprüche 6 bis 8, dadurch gekennzeichnet, daß die erste Neßwertgeberbrücke zwei Meßwertgeberpaare ($R_1$, $R_3$); ($R_2$, $R_4$) enthält, die in bezug auf die mittlere Längsachse (X) und in bezug auf die mittlere Querachse (Z) des Stabs (1) symmetrisch angeordnet sind.

10. Gerät nach Anspruch 9, dadurch gekennzeichnet, daß die zweite Meßwertgeberbrücke vier Meßwertgeber ($R_5$, $R_6$, $R_7$, $R_8$) enthält, die um 45° von der Achse (X) symmetrisch in bezug auf diese Achse und in bezug auf eine zur Achse (Z) parallelen Achse (Z) angeordnet sind.

11. Gerät nach Anspruch 9, dadurch gekennzeichnet, daß die dritte Meßwertgeberbrücke zwei Meßwertgeberpaare ($R_9$, $R_{10}$); $R_{11}$, $R_{12}$) enthält, von denen das eine parallel zur Achse (X) ist, wohingegen das andere parallel zur Achse (Z) ist.

12. Gerät nach Anspruch 9, dadurch gekennzeichnet, daß die zweite Meßwertgeberbrücke zwei Meßwertgeber ($R_8$, $R_8$) enthält, die um 45° von der Achse (X) angeordnet und in bezug auf die Achse (Z) versetzt sind.

13. Gerät nach Anspruch 9, dadurch gekennzeichnet, daß die dritte Meßwertgeberbrücke zwei Meßwertgeber ($R_9$, $R_{10}$) enthält, die beiderseits der Achse (Z) und jeweils parallel und senkrecht zur Achse (X) angeordnet sind.

EP 0 317 429 B2

FIG.1

FIG.2

FIG.3

FIG.4

13

FIG.5

FIG.6

FIG.7